# EUROPEAN PATENT SPECIFICATION

(11) **EP 3 561 143 B1**
(45) Date of publication and mention of the grant of the patent: **16.08.2023**
(21) Application number: 17883916.3
(22) Date of filing: 07.12.2017
(51) Int. Cl.: C23C 4/06, C23C 4/08, C23C 30/00, B22F 1/00, C22C 33/02, B22F 7/08

(54) **METHOD FOR FORMING THERMAL SPRAYING COATING FILM OF INTERMETALLIC COMPOUND, THERMAL SPRAYING COATING FILM, METHOD FOR PRODUCING METAL PRODUCT HAVING SPRAY COATING FILM AND GLASS-CONVEYING ROLL**
VERFAHREN ZUM BILDEN EINES THERMISCHEN SPRITZBESCHICHTUNGSFILM EINER INTERMETALLISCHEN VERBINDUNG, THERMISCHER SPRITZBESCHICHTUNGSFILM, VERFAHREN ZUM HERSTELLEN EINES METALLISCHEN PRODUKTS UMFASSEND SPRITZBESCHICHTUNGSFILM UND GLASFÖRDERROLLE
PROCÉDÉ DE FORMATION D'UN FILM D'ENROBAGE D'UN COMPOSÉ INTERMÉTALLIQUE PAR PROJECTION THERMIQUE, FILM D'ENROBAGE PAR PROJECTION THERMIQUE, PROCÉDÉ DE PRODUCTION D'UN PRODUIT MÉTALLIQUE COMPRENANT UN FILM D'ENROBAGE PAR PROJECTION ET ROULEAU DE TRANSPORT DE VERRE

(30) Priority: 21.12.2016 JP 2016248029
(43) Date of publication of application: 30.10.2019
(73) Proprietor: AGC INC., Chiyoda-ku, Tokyo 1008405 (JP)
(72) Inventor: HAMASHIMA, Kazuo, Tokyo 100-8405 (JP); ISHIKAWA, Yasunari, Tokyo 100-8405 (JP)
(74) Representative: Müller-Boré & Partner Patentanwälte PartG mbB
(86) International application number: PCT/JP2017/044078
(87) International publication number: WO 2018/116856

(56) References cited:
- JP-A- H0 578 801
- JP-A- H0 578 801
- JP-A- H0 920 976
- JP-A- H08 175 828
- JP-A- H08 175 828
- JP-A- H08 199 329
- JP-A- H08 199 329
- JP-A- H10 324 964
- JP-A- 2003 013 259
- JP-A- 2003 013 259
- JP-A- 2007 314 874
- JP-A- 2009 263 692
- JP-A- 2010 242 204

## Description

### TECHNICAL FIELD

The present invention relates to a method for forming a thermal spray coating film of an intermetallic compound on the surface of a metal substrate, and a thermal spray coating film of an intermetallic compound. In particular, the present invention relates to a method for forming a thermal spray coating film of an Al-Fe based intermetallic compound, on the surface of a metal substrate made of iron or an iron-based alloy, and a thermal spray coating film of an intermetallic compound formed. Further, the present invention relates to a glass-conveying roll comprising a metal product having the thermal spray coating film.

### BACKGROUND ART

Heretofore, in a step for producing a glass plate by float process, a variety of glass-conveying rolls such as a lift-out roll for pulling up a continuous layer of high-temperature glass, called a glass ribbon, flowing on the upper surface of molten tin, from a tin bath, and a lehr roller for moving the glass ribbon in a furnace that gradually cools the glass ribbon while moving it, are used.

The glass-conveying rolls, which are contacted directly with a high temperature glass before cooling for solidification, affect the quality of a glass plate. For example, a glass ribbon immediately after being taken out from a tin bath has a sufficiently high temperature, and if the surface of a roll is made of a metal composed mainly of iron, microscopic adhesion easily occurs between the roll and the glass ribbon. Further, upon moving of the glass ribbon on the roll, the glass adhering thereto tends to be peeled from the ribbon and remain on the surface of the roll. Since a metal roll is excellent in heat conduction, a minute glass residue adhering to the surface of the metal roll is easily deprived of heat and solidified, and thereby scratches the surface of a glass ribbon subsequently conveyed.

Further, on the lower surface of the glass ribbon pulled up from the tin bath, a small amount of metal tin or tin oxide is deposited. At the time of conveying such a glass ribbon by a metal roll, a part of the deposit tends to be firmly adhered to the surface of the conveying roll, and thereby scratch the surface of a glass ribbon, like the above-mentioned glass residue.

Furthermore, in a process of conveying a glass ribbon or a glass plate, there is a case where sulfur oxide gas is made to flow for applying a protective film made of a sulfuric acid compound on the lower surface of the glass. In such a case, the surface of the metal roll tends to corrode, and, as a result, contaminate the glass, but no corrosion occurs in the case of a ceramic coating.

Therefore, a glass-conveying roll having a ceramic thermal spray coating film applied on the surface of a roll base material made of a metal, and having a metal layer or a cermet thermal spray coating film interposed, as a bond layer, between the roll base material and the ceramic thermal spray coating film, has been proposed.

For example, Patent Document 1 discloses a convey roll having a ceramic thermal spray coating film formed on the surface of a roll base material, and further having a bond coat made of cermet interposed between the base material and the ceramic thermal spray coating film.

Further, Patent Document 2 discloses a float glass-producing roll having a ceramic thermal spray coating film applied on the surface of a metal substrate of a roll body portion, and further having a metal thermal spray coating film with a linear thermal expansion coefficient which is the medium between that of the metal substrate and that of the ceramic thermal spray coating film, interposed between the metal substrate and the ceramic thermal spray coating film.

In Patent Documents 1 and 2, a ceramic thermal spray coating film is formed so as to suppress deposit of a glass residue or a tin aggregate, and at the same time a bond coat containing a metal between a roll base material and a ceramic thermal spray coating film is formed to suppress delamination of the ceramic thermal spray coating film due to the difference in linear thermal expansion coefficient between that of the ceramic thermal spray coating film and that of the roll base material.

On the other hand, if a metal coating film having the same function as the ceramic thermal spray coating film and further having substantially the same linear thermal expansion coefficient as the roll base material, is formed on the surface of the roll base material, it is possible to suppress delamination of the ceramic thermal spray coating film due to difference in linear thermal expansion coefficient with the roll base material.

For the purpose of improving oxidation resistance, corrosion resistance, wear resistance and non-adhesive to a metal of the metal substrate, attempts have been made to form a diffusion coating film on the surface of a metal substrate by calorizing treatment (Patent Documents 3 to 5).

Al diffused to the surface of a metal substrate forms an intermetallic compound with a metal material on the surface of the substrate. In a case where the metal substrate is made of iron or an iron-based alloy such as stainless steel, an Al-Fe based intermetallic compound is formed.

However, calorizing treatment has the following problems.
(1) Size of a treatment furnace is restricted since the treatment is batch treatment.
(2) A metal substrate may deteriorate due to high-temperature treatment in the vicinity of 1,000°C.
(3) As shown in the after-mentioned Examples, a coating film formed by calorizing treatment is brittle, and therefore the coating film may be peeled from the metal substrate when used for a glass-conveying roll.

On the other hand, it has been studied to form an Al-Fe based thermal spray coating film on the surface of a metal substrate (Non-Patent Documents 1 to 3).

However, a conventional Al-Fe based thermal spray coating film has the following problems.

In the case of forming an Al-Fe based thermal spray coating film, an Fe-AI based alloy powder having an Al content of 25 weight% is widely used as feedstock for thermal spray coating, therefore a main constituent phase of a thermal spray coating film formed is FeAl, and such a compound has high ductility as an intermetallic compound. In an application where ductility is required for the thermal spray coating film, the ductility is preferred film properties, but in a case where such a film is applied to a glass-conveying roll, there are problems from the viewpoint of low hardness, and a possibility of hydrogen brittleness due to formation of excess pores by quenching.

### PRIOR ART DOCUMENTS

### PATENT DOCUMENTS

Patent Document 1: JP-A-2004-277828
Patent Document 2: JP-A-H4-260623
Patent Document 3: JP-A-H10-219426
Patent Document 4: JP-A-2009-263692
Patent Document 5: JP-A-2015-229787

### NON-PATENT DOCUMENTS

Non-Patent Document 1: J. M. Guilemany, C. R. C. Lima, N. Cinca, J. R. Miguel, 'Studies of Fe-40AI coatings obtained by high velocity oxy-fuel', Surface & Coatings Technology 201 (2006) 2072-2079.
Non-Patent Document 2: Hong-Tao Wang, Chang-Jiu Li, Guan-Jun Yang, Cheng-Xing Li, 'Cold spraying of Fe/AI powder mixture: Coating characteristics and influence of heat treatment on the phase structure', Applied Surface Science 255 (2008) 2538-2544.
Non-Patent Document 3: J. M. Guilemany, N. Cinca, J. Fernandez, and S. Sampath, 'Erosion, Abrasive, and Friction Wear Behavior of Iron Aluminide Coatings Sprayed by HVOF', Volume 17(5-6) Mid-December 2008 Journal of Thermal Spray Technology.

Moreover, thermally sprayed Al-Fe intermetallic compound coating films are disclosed by JP-H05-078801 and JP-H08-199329.

### DISCLOSURE OF INVENTION

### TECHNICAL PROBLEM

In order to solve the above-described problems of prior art, it is an object of the present invention to provide a method for forming a thermal spray coating film of an Al-Fe based intermetallic compound having high hardness, on a metal substrate, and a coating film of an intermetallic compound.

### SOLUTION TO PROBLEM

In order to achieve the above object, the present invention provides a method for forming a thermal spray coating film, as well as a thermal spray coating film of an Al-Fe based intermetallic compound, as defined in the appended claims.

### ADVANTAGEOUS EFFECTS OF INVENTION

The thermal spray coating film of an Al-Fe based intermetallic compound formed by the method of the present invention has a high hardness as compared with a conventional Al-Fe based thermal spray coating film, and has no concern about hydrogen embrittlement by quenching.

Further, the thermal spray coating film of an Al-Fe based intermetallic compound formed by the method of the present invention has a high toughness as compared with a coating film of an Al-Fe based intermetallic compound formed by calorizing treatment, and a metal substrate will not reach high temperature during the treatment. Further, in the case of the above thermal spray coating film formed by the present invention, various size and shape of a substrate is applicable as compared with a calorizing method in which a closed container is needed.

Further, a difference in linear thermal expansion coefficient with a metal substrate the surface of which is made of iron or an iron-based alloy is small, and therefore it is possible to suppress peeling of the coating film due to the difference in linear thermal expansion coefficient.

### BRIEF DESCRIPTION OF DRAWINGS

Fig. 1 is an Al-Fe based equilibrium diagram.
Fig. 2(a) is an SEM image showing a cross section of the thermal spray coating film in Ex. 1.
Fig. 2(b) is a magnified image in the vicinity of a surface side of the thermal spray coating film in Fig. 2(a).
Fig. 2(c) is a mapping image of Al analyzed by EDS of the imaging part of Fig. 2(b).
Fig. 2(d) is a mapping image of O analyzed by EDS of the imaging part of Fig. 2(b).
Fig. 3(a) is an SEM image showing a cross section of a coating film formed by calorizing treatment.
Fig. 3(b) is a magnified image in the vicinity of a surface side of a thermal spray coating film in Fig. 3(a).
Fig. 3(c) is a mapping image of Al analyzed by EDS of the imaging part of Fig. 3(b).
Fig. 3(d) is a mapping image of O analyzed by EDS of the imaging part of Fig. 3(b).
Fig. 4(a) is a graph showing an EDS analysis result of a coating film formed by calorizing treatment, and Fig. 4(b) is an SEM image at a measurement part thereof.
Fig. 5 is a metallographic microscope image of indentations by a Vickers hardness tester diamond indenter pressed into the cross section of each of the coating film of Ex. 1 and the coating film of Comp. Ex. 1.
Fig. 6 is an image of an Sn wettability evaluation sample in each of Ex. 2 and Comp. Ex. 3.
Fig. 7 is an image of an Sn wettability evaluation sample after heating in each of Ex. 2 and Comp. Ex. 3.
Fig. 8 is an image of an Sn wettability evaluation sample after heating in each of Ex. 2 and Comp. Ex. 3.
Fig. 9 is an image of a glass wettability evaluation sample in each of Ex. 3 and Comp. Ex. 4.
Fig. 10 is an image of a glass wettability evaluation sample after heating in each of Ex. 3 and Comp. Ex. 4.

### DESCRIPTION OF EMBODIMENTS

Now, the present invention will be explained below. The method of the present invention relates to a method for forming a thermal spray coating film of an Al-Fe based intermetallic compound on the surface of a metal substrate.

The metal substrate of the present invention is a metal substrate used in an application where heat resistance, molten metal resistance, corrosion resistance at high temperature, wear resistance and non-adhesive to a metal or a glass are required, such as a glass-conveying roll. Further, a metal component (such as a component for sealing or a brick receiving component) having a portion exposed to an atmosphere of a float bath in a float glass production equipment, as described in WO2010/070982, may be mentioned.

In the metal substrate in the present invention, a constituent material of the surface on which a thermal spray coating film of an Al-Fe based intermetallic compound is formed is iron or an iron-based alloy such as stainless steel.

The metal substrate in the present invention is such that the constituent material of the entire metal substrate is iron or an iron-based alloy, or that only a constituent material of the surface on which the thermal spray coating film of an Al-Fe based intermetallic compound is formed is iron or an iron-based alloy. In the latter case, a constituent material other than that of the surface on which the thermal spray coating film of an Al-Fe based intermetallic compound is formed, may be a lightweight metal material such as aluminum, an aluminum alloy, magnesium or a magnesium alloy, or a ceramic material may be used.

In the method of the present invention, as the feedstock for thermal spray coating, a mixture of an Al-Fe based intermetallic compound powder composed of FeAl₂ and a metal powder composed of Fe, is used.

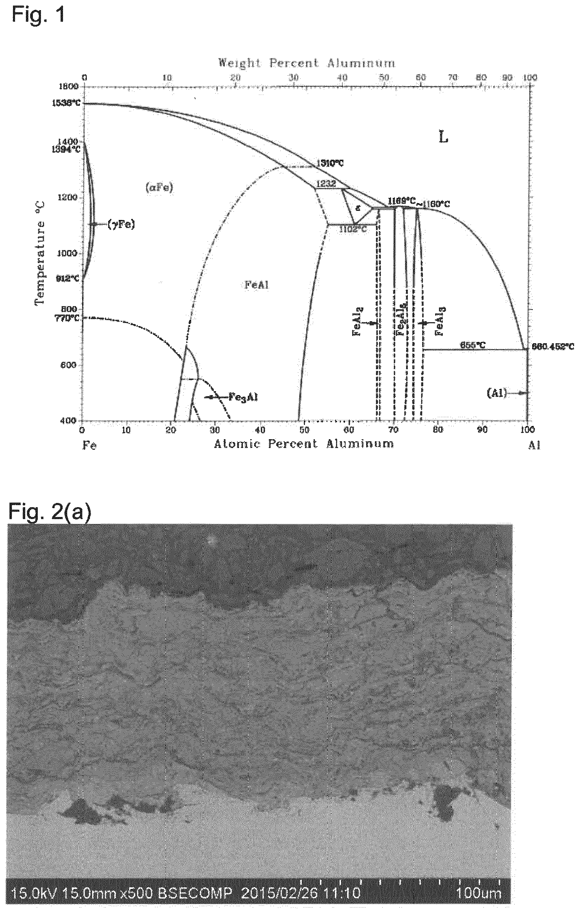

Fig. 1 is an Al-Fe based equilibrium diagram referred from database of thermodynamic equilibrium calculation software FactSage (Ver. 6.3, manufactured by Research Center of Computational Mechanics, Inc.). As shown in Fig. 1, in the Al-Fe based intermetallic compound, multiple constituent phases are present depending on proportions of Al and Fe and a temperature range of an eutectic reaction. FeAl₂ is produced in proportions of Al being from 60 to 70 at% and Fe being from 30 to 40 at% and a temperature range of an eutectic reaction being from 1,000 to 1,200°C.

Due to brittleness as compared with FeAl as a main constituent phase of a conventional Al-Fe based thermal spray coating film, a bulk product of the Al-Fe based intermetallic compound is crushed by combining known means such as coarse grinding method by e.g. a cutter mill or a jaw crusher, and a fine grinding method by e.g. a ball mill or a planetary mill, to obtain an Al-Fe based metal compound powder.

Here, the bulk material of the Al-Fe based intermetallic compound may, for example, be obtained by melting an Fe feedstock and an Al feedstock by a known means such as electric heating or arc melting in a non-oxidative atmosphere or vacuum, followed by cooling.

In this specification, in the case of describing an Al-Fe based intermetallic compound powder composed of FeAl₂, the proportion of FeAl₂ in the Al-Fe based intermetallic compound powder is at least 75 weight%. The reason to use the Al-Fe based intermetallic compound powder having a proportion of FeAl₂ of the above ranges, is as follows.

FeAl having less Al amount than FeAl₂ has a high ductility as an intermetallic compound, and it is therefore difficult to efficiently grind it by the above-mentioned method. On the other hand, Fe₂Al₅ or FeAl₃ having more Al amount than FeAl₂ is exceedingly oxidized by grinding.

In this specification, the Al-Fe based intermetallic compound powder described hereinafter indicates the above-defined Al-Fe based intermetallic compound powder composed of FeAl₂.

The proportion of FeAl₂ in the Al-Fe based intermetallic compound powder is preferably at least 80 weight%, furthermore preferably at least 85 weight%.

The Al-Fe based intermetallic compound powder contains a constituent phase other than FeAl₂, as long as the proportion of FeAl₂ satisfies the above range. As the constituent phase other than FeAl₂, FeAl or Fe₂Al₅ are mentioned.

It is preferred that the weight ratio (Al/Fe) of Al to Fe in the Al-Fe based intermetallic compound powder is from 0.90 to 1.15. FeAl₂ is such that the weight ratio of Al to Fe is 1.0 (50AI-50Fe). When the weight ratio (AI/Fe) of Al to Fe in the Al-Fe based intermetallic compound powder is from 0.90 (47 AI-53Fe) to 1.15 (53AI-47Fe), it is possible to satisfy the above-mentioned proportion of FeAl₂ in the Al-Fe based intermetallic compound powder.

Further, the weight ratio (Al/Fe) of Al to Fe in the Al-Fe based intermetallic compound powder is almost same as the weight ratio (Al/Fe) of Al to Fe in a feedstock used in preparation of a bulk material of the Al-Fe based intermetallic compound by the above-mentioned procedure. Accordingly, when the weight ratio of Al to Fe in a feedstock used in preparation of the bulk material of the Al-Fe based intermetallic compound is from 0.90 to 1.15, the weight ratio (AI/Fe) of Al to Fe in the Al-Fe based intermetallic compound powder obtainable by grinding the bulk material of the Al-Fe based intermetallic compound is from 0.90 to 1.15, whereby it is possible to obtain the Al-Fe based intermetallic compound powder composed mainly of FeAl₂.

The weight ratio (AI/Fe) of AI to Fe in the Al-Fe based intermetallic compound powder is more preferably from 0.95 (49Al-51Fe) to 1.10 (52AI-48Fe).

As the metal powder composed of Fe, a powder of Fe or a powder of a Fe-based alloy such as a binary alloy such as a Fe-AI alloy or a Fe-Cr alloy or stainless steel, may be used. In this specification, in the case of describing the metal powder composed mainly of Fe, the proportion of Fe in the metal powder is preferably at least 70 weight%. The reason to use a metal powder having a proportion of Fe within the above range, is as follows.

If the proportion of Fe is less than 70 weight%, such an element is more likely to form a compound with Fe and Al in a production process of a coating film or an application environment at a high temperature, whereby a coating film is likely to be, for example, more brittle, and therefore advantageous properties of the coating film may deteriorate.

In this specification, the above-defined metal powder composed of Fe is hereinafter referred to as a Fe based metal powder.

The Fe based metal powder may be obtained by a known method such as an atomization method, a reduction method or an electrolytic method.

In the method of the present invention, in the above mixture, a blend ratio of the Al-Fe based intermetallic compound powder to the Fe based metal powder is from 70/30 to 80/20 by a weight ratio, for the following reasons.

If the amount of the Al-Fe based intermetallic compound powder is too large, oxidation during preparation of a mixed powder easily proceeds, and as a result, it becomes difficult to obtain a dense thermal spray coating film. On the other hand, if the amount of the Fe powder increases, a reaction to form a new intermetallic compound from Fe and Al, as an exothermic reaction, is activated during the thermal spray coating, and therefore it is impossible to obtain a coating film having stable properties.

The blend ratio of the Al-Fe based intermetallic compound powder to the Fe based metal powder is preferably from 73/27 to 77/23.

In the above mixture, the weight ratio (Al/Fe) of Al to Fe is from 0.55 to 0.85. In a case where the weight ratio (Al/Fe) of Al to Fe is from 0.55 to 0.85, the constituent phase of the intermetallic compound is FeAl+FeAl₂ as shown in Fig. 1.

Therefore, in a case where the above mixture is used as a feedstock for thermal spray coating, a thermal spray coating film formed becomes a coating film having a multi-phase structure containing FeAl, FeAl₂ and FeAl-FeAl₂ as a constituent phase.

The coating film having a multi-phase structure containing FeAl, FeAl₂ and FeAI-FeAl₂ (hereinafter referred to as a coating film having a multi-phase structure of an Al-Fe based intermetallic compound), shows the following effects.

As shown in the after-mentioned Examples, a coating film formed by calorizing treatment is brittle, and therefore the coating film cracked only by polishing the surface of the coating film after cutting a sample for photographing a scanning electron microscopic (SEM) image showing a cross section of the coating film, by a wire electrical discharge machine.

On the other hand, the coating film having a multi-phase structure of an Al-Fe based intermetallic compound has a sufficient toughness.

Such a difference can be estimated by comparing a constituent phase expected from results of an SEM image showing a cross section of a coating film formed by calorizing treatment, an energy dispersible X-ray spectrometry (EDS), and a mapping image in the vicinity of a surface side of the cross section of the coating film by EDS' and a structure of the present invention.

In the case of the coating film formed by the calorizing treatment, a diffusion layer is present between the metal substrate and the Al-Fe based intermetallic compound, the coating film itself appears to be almost uniform as a whole, the weight ratio of Fe to Al is close to 1, and therefore it can be estimated that most of the constituent phase is brittle FeAl₂. However, a part of the surface layer of the cross section of the coating film has a region where from 5 to 10 µm of Al₂O₃ is agglomerated.

On the other hand, in the case of the coating film having a multi-phase structure of an Al-Fe based intermetallic compound, FeAl having ductility, formed by the reaction with a metal feedstock during the thermal spray coating, is present in the vicinity of FeAl₂ even when most of the constituent phase of the Fe-Al intermetallic compound is FeAl₂, and as a result, a coating film produced has a strong toughness as compared with the calorized coating film. Further, as is different from the calorizing treatment, fine Al₂O₃ is dispersed in the coating film. Al₂O₃ dispersed in the coating film is less than 5 µm, mere preferably at most 3 µm. Further, a distance between the Al₂O₃ having a size of less than 5 µm, being present within 50 µm from the surface layer of the cross section of the coating film, is preferably at least 5 µm, more preferably at least 10 µm.

With respect to the thermal spray coating film of an Al-Fe based intermetallic compound of the present invention, a mixed powder of the Al-Fe based intermetallic compound powder and the Fe based metal powder is flattened and laminated, by heat and collision energy in the thermal spraying process, to form a multi-phase structure. By Al contained in the powder being oxidized when the heated mixed powder is deposited, Al₂O₃ is present at interfaces where flattened particles are piled up. When the mixed powder of the Fe based metal powder is flattened and laminated, particles laminated are less likely to fall off from the coating film. On the other hand, according to a method such as calorizing treatment, Al₂O₃ exhibits a high-temperature corrosion resistance to SO₂ but agglomerates at a part of the surface layer to form agglomerates and thereby becomes inhomogeneous, and due to the difference in thermal expansion coefficient at the time of heating, a thermal stress is generated at the portion thereby to form fractures or cracks in the coating film, and therefore the coating film tends to peel or partly fall off when used as a glass-conveying roll. Further, it has been known that the calorized layer loses its effect as a modified layer because Al is easily diffused in the substrate when it becomes about 900°C. On the other hand, in the case of the thermal spray coating film of the Al-Fe based intermetallic compound of the present invention, it is possible to reduce the deterioration of the effect as the modified layer, as mentioned in e.g. calorizing treatment, because it has many interfaces in the modified layer and has no diffusion layer.

A conventional Al-Fe based thermal spray coating film containing FeAl as a main constituent phase, as shown in the after-mentioned Examples, has low hardness, and therefore it is not suitable for applications where the coating film is considered to be in contact with other components. Further, a single phase material such as alumina having a B2 structure, such as FeAl, may form a plurality of pores usually by quenching, and therefore undesirable properties such as hydrogen brittleness are considered to become apparent.

It is considered that this is due to ductility of FeAl in the main constituent phase of the thermal spray coating film.

On the other hand, the thermal spray coating film of the Al-Fe based intermetallic compound of the present invention, which is a coating film having a multi-phase structure containing FeAl, FeAl₂, and FeAl-FeAl₂, has high surface hardness and further will not have a plurality of pores formed even by quenching.

Further, when the weight ratio (Al/Fe) of Al to Fe in the mixture is from 0.55 to 0.85 as shown in the after-mentioned Examples, the average thermal expansion coefficient of the thermal spray coating film of the intermetallic compound in a temperature range of from room temperature to 700°C, is substantially the same as that of stainless steel (SUS304) widely used as a metal substrate of a glass-conveying roll, and therefore peeling of the coating film when used as a glass-conveying roll is reduced.

Further, the Vickers hardness of soda lime silicate glass is about 530 at room temperature, but is estimated to be lower than the Vickers hardness of the thermal spray coating film of the Al-Fe based intermetallic compound in a temperature range of from 400 to 800°C. Accordingly, the coating film may not be damaged by e.g. a cullet when used as a glass-conveying roll.

In the method of the present invention, the weight ratio (Al/Fe) of Al to Fe in the mixture is more preferably from 0.60 to 0.80.

The feedstock for thermal spray coating used in the method of the present invention can be prepared as follows.

The Al-Fe intermetallic compound powder and the Fe based metal powder are respectively weighed, and mixed and crushed in an organic solvent such as ethanol, using a rotary ball mill or a vibratory ball mill. Needless to say, in order to obtain an excellent properties powder, it is usually advantageous that these feedstock powders have a higher purity and are fine. In particular, in order to ensure homogeneity of the thermal spray coating powder, it is preferred that the Al-Fe based intermetallic compound powder and the Fe based metal powder have an average particle size of at most 10 µm.

The powder ground and mixed by e.g. a rotary ball mill (or a vibratory ball mill) is fine and thus is not suitable as a thermal spray coating powder when used as it is, and therefore it is preferred to carry out granulation process using e.g. a spray dryer in a non-oxidative atmosphere and adding an organic binder. The organic binder to be used is preferably one which is easily removed during sintering, such as an acrylic resin or polyethylene glycol. The granurated powder is usually spherical and has good flowability, but is not hard enough to withstand conveyance by pressurized gas.

When this granulated powder is calcined at a temperature of from 800 to 1,000°C in a non-oxidative atmosphere such as vacuum orAr, the organic binder is removed, and at the same time primary particles in the granulated powder are sintered with one another while keeping spherical shape. When the resulting powder is crushed, it becomes roughly spherical, and is less likely to easily collapse even when conveyed by pressurized gas.

Such spherical porous particles thus obtained are classified so as to have specified particle sizes, and then used as feedstock for thermal spray coating. A preferred average particle size is from 10 to 100 µm, more preferably from 15 to 75 µm.

Here, the above average particle size is calculated as follows. Using sieves prescribed in JIS Z8801 , several sieves having different sieve openings are piled up in ascending order from the smallest opening, and vibration is imparted at a constant time with a constant amplitude. The mass of the sample remaining on each sieve was measured, a cumulative distribution of the mass was described in a graph, and the particle size corresponding to the cumulative value of the particle size distribution being 50% was treated as the average particle size.

The thermal spray coating method used in the method of the present invention is not particularly limited, but is preferably a high velocity oxygen fuel method or an atmospheric plasma spraying method.

The thickness of the coating film formed in the method of the present invention is not particularly limited, but is preferably from 0.05 to 1.5 mm, more preferably from 0.1 to 1.0 mm.

The coating film formed by the method of the present invention has the following preferred properties in addition to the above mentioned point.

The coating film formed by the method of the present invention, which is composed of an Al-Fe intermetallic compound, is excellent in non-adhesive to molten tin and glass. Further, the coating film is excellent in high-temperature corrosion resistance to SO₂ which can be present in an atmosphere where a glass-conveying roll is controlled.

Proposed is a method wherein a coating film of metal aluminum is formed by a hot dip plating method on the surface of an iron based metal component, and utilizing a reaction of a substrate with a coating layer by heat treatment of the component, so as to change the coating film of metal aluminum to a state where multiple Fe-Al based intermetallic compounds such as FeAl and FeAl₂ are present. However, such a method is significantly different from the technique of the present invention from the viewpoint that it is difficult to control a structure and ratio of presence of the precipitation phase of the coating layer and that heat treatment after coating is essential.

Further, the present invention relates to a method for producing a metal product by forming a thermal spray coating film of an Al-Fe based intermetallic compound on the surface of a metal substrate by the method for forming a thermal spray coating film of the present invention, to produce a metal product comprising the metal substrate having the thermal spray coating film.

The metal product of the present invention is a metal product used for applications requiring heat resistance, molten metal resistance, high temperature corrosion resistance, wear resistance, non-adhesive to a metal or a glass, and rigidity of a structure at a high temperature. Particularly preferred is a metal product having a surface to be in contact with a molten glass or a glass formed product at a high temperature (such as a glass ribbon drawn out from a float bath). In particular, for example, a metal component (such as a component for sealing or a brick receiving component) having a portion exposed to an atmosphere of a float bath in a float glass production equipment, or a glass-conveying roll, may be mentioned.

Particularly preferred is a glass-conveying roll to be in contact with a glass ribbon drawn out from a float bath.

Further, the present invention is a thermal spray coating film of an Al-Fe based intermetallic compound, which has a multi-phase structure in a scanning electron microscopic (SEM) image showing a cross-section of the thermal spray coating film of an Al-Fe based intermetallic compound.

The composition of the thermal spray coating film is substantially the same as the composition of the mixture used in its formation. That is, the thermal spray coating film of the present invention has a weight ratio (Al/Fe) of Al to Fe being from 0.55 to 0.85. Further, Al₂O₃ particles in the thermal spray coating film have a size of less than 5 µm as mentioned above, and further as mentioned above, it is preferred that a distance between the Al₂O₃ particles being present within 50 µm from the surface layer of the thermal spray coating film is at least 5 µm.

Furthermore, the present invention provides a glass-conveying roll comprising a metal roll having the thermal spray coating film on its surface.

### EXAMPLES

Now, the present invention will be described in further detail with reference to Examples, but the present invention is by no means restricted thereto.

### (Ex. 1)

A feedstock for thermal spray coating was prepared as follows.

A bulk material of a Fe-AI intermetallic compound having an Al content of 48 weight% was crushed by a ball mill to obtain a Fe-AI intermetallic compound powder (average particle size: 8 µm). The proportion of a FeAl₂ intermetallic compound in this powder was about 80 weight%.

A powder (average particle size: 5 µm) of a Fe alloy (stainless steel) was prepared by an atomization method, whereupon the proportion of Fe in this powder was 74 weight%.

The above Fe-AI intermetallic compound powder and the above Fe alloy powder were weighed and mixed in a weight ratio of the Fe-AI intermetallic compound having an Al content of 48 weight% to the Fe alloy (stainless steel) being 72:28 so that the weight ratio (Al/Fe) of Al to Fe in the mixture would be 0.61, and charged into a rotary ball mill, and the resultant was mixed and crushed for 48 hours using ethyl alcohol as an organic solvent.

0.5 weight% of polyethylene glycol was added to a slurry obtained, the viscosity was adjusted, and then granulation process was carried out using a disk atomizer type spray dryer to prepare a granulated powder having an average particle size of about 48 µm. This granulated powder was calcined in an Ar atmosphere at 850°C for one hour, and then crushed and classified to obtain a feedstock for thermal spray coating having an average particle size of 42 µm.

On a metal substrate (SUS304 plate) subjected to blast treatment using an alumina grid, a thermal spray coating film (film thickness: 250 µm) was formed from the feedstock for thermal spray coating obtained by the above procedure, by means of an atmospheric plasma spraying method.

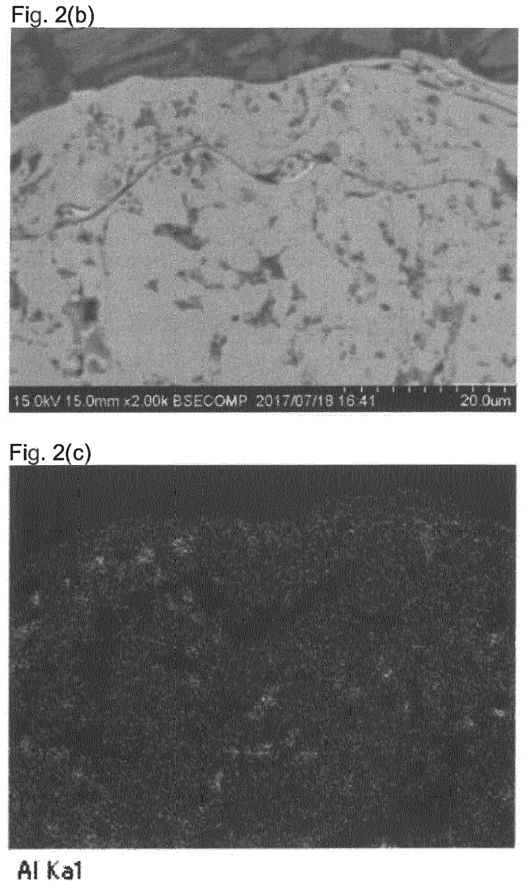

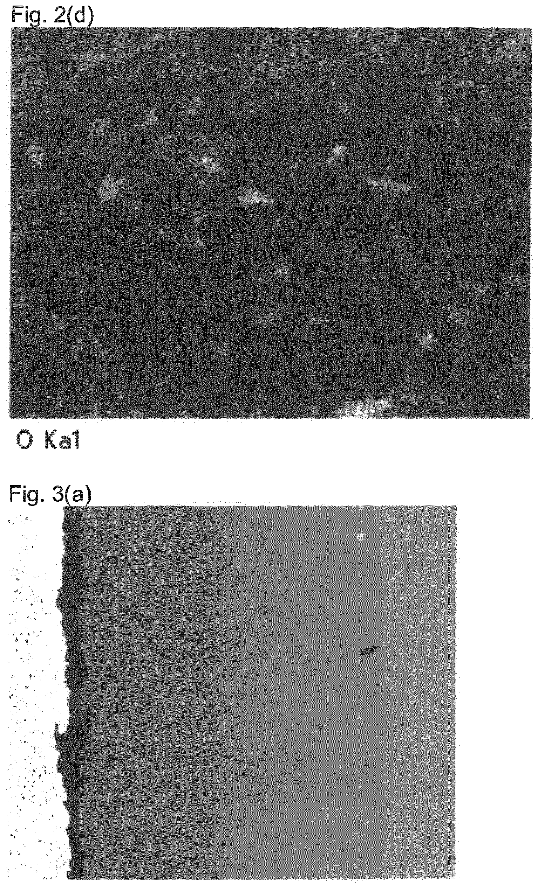

A cross sectional image after the thermal spray coating film was formed, was photographed by a scanning electron microscope (SEM) (see Fig. 2). In Fig. 2(a), the upper portion corresponds to a resin applied on the surface of the thermal spray coating film, for cutting the sample, the center portion corresponds to the thermal spray coating film, and the lower portion corresponds to the metal substrate. It is observed from Fig. 2(a) that the formed thermal spray coating film had few pores, and the adhesion at the interface was favorable. A powder scratched from the coating film by means of a machining was analyzed by an X-ray diffraction method (XRD), whereby it was confirmed that the constituent phase of the thermal spray coating film formed was a multi-phase structure containing FeAl and FeAl₂.

Fig. 2(b) is a magnified image in the vicinity of a surface side of a thermal spray coating film in Fig. 2(a). The upper portion in Fig. 2(b) corresponds to the above-mentioned resin. Fig. 2(c) is a mapping image of Al analyzed by EDS of the imaging part of Fig. 2(b). Fig. 2(d) is a mapping image of O analyzed by EDS of the imaging part of Fig. 2(b). As is clear from Fig. 2(a) to Fig. 2(d), a mixed powder of the Al-Fe based intermetallic compound powder and the Fe based metallic powder was flattened and laminated by heat and collision energy in the thermal spray process to form a multi-phase structure. It is found that, in the vicinity of the surface of the thermal spray coating film, Al₂O₃ is entirely and homogeneously dispersed. Al₂O₃ dispersed in the coating film is less than 5 µm, and therefore a distance between Al₂O₃ being present within 50 µm from the surface layer is at least 5 µm.

Fig. 3(a) is an SEM image showing a cross section of a coating film formed by calorizing treatment. From the left side of the micrograph, a resin applied for cutting, a void layer and a coating film formed by calorizing treatment are observed in this order. Here, the void layer is one formed by delamination between the resin and the coating film during the cutting. This coating film was formed by the following steps. A stainless steel (SUS304) substrate was mounted in a steel-made case together with a Fe-Al alloy powder and a NH₄Cl powder, and the case was sealed, followed by heating at 950°C in a furnace. The coating film was broken only by polishing the surface of the coating film by cutting the sample for photographing a SEM image showing a cross section.

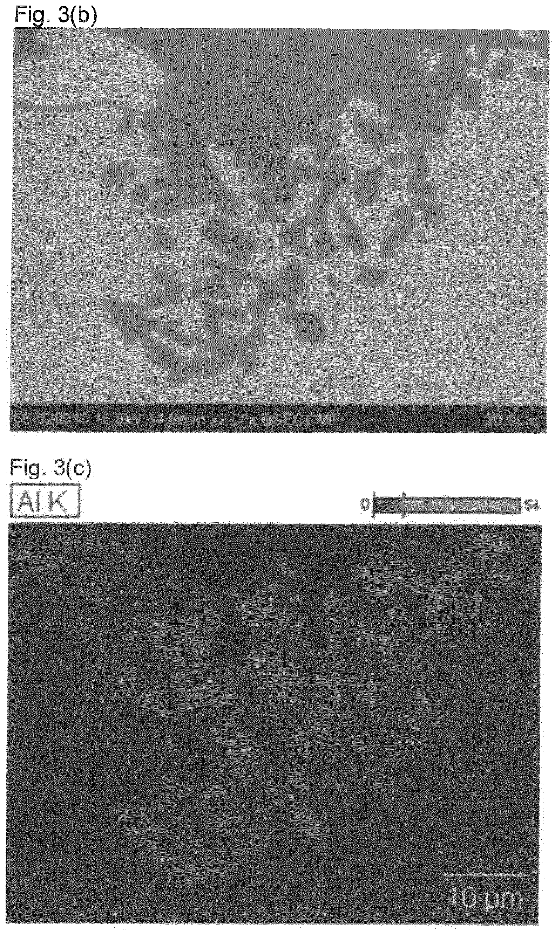

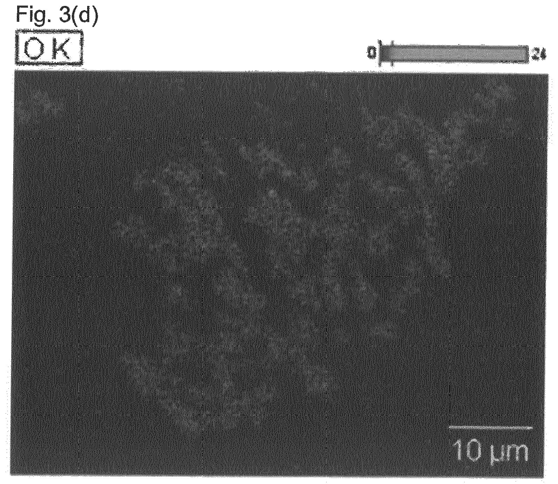

Fig. 3(b) is a magnified image in the vicinity of a surface side of the coating film formed by calorizing treatment in Fig. 3(a). A black region at a center is one in which Al₂O₃ agglomerated. Other regions are made of the uniform alloy formed by calorizing. Fig. 3(c) is a mapping image of Al analyzed by EDS of the imaging part of Fig. 3(b). Fig. 3(d) is a mapping image of O analyzed by EDS of the imaging part of Fig. 3(b). As shown in Figs. 3(b) to (d), on a part of the surface of the coating film, Al₂O₃ is at least agglomerated in a region of 5 µm or more, and in a larger region, it exceeds 10 µm. The coating film formed by calorizing in Fig. 3(a) seems to be almost uniform as a whole, but as shown in Figs. 3(b) to (d), it is found that a region on which Al₂O₃ is agglomerated is actually present.

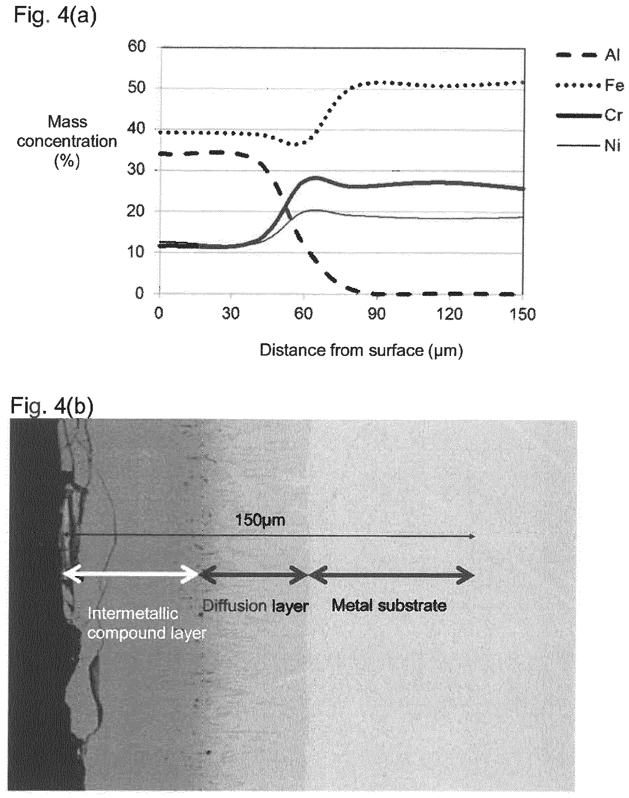

Fig. 4 is a result of an energy dispersive X-ray spectrometry (EDS) analysis of a cross section showing a coating film formed by calorizing treatment (upper graph) and an SEM image at a measurement part thereof (lower figure). Analyzed sections are arrow portions, and a mass concentration obtained by analysis from the surface side to the inside of the substrate by using EDS corresponds to the position of the SEM image. In the case of the coating film formed by the calorizing treatment, a diffusion layer is present between the metal substrate and the Al-Fe based intermetallic compound, the coating film itself appears to be almost uniform as a whole, the weight ratio of Fe to Al in the intermetallic compound phase is close to 1, and therefore it is possible to estimate that most of the constituent phase is brittle FeAl₂.

On the other hand, in the case of a coating film having a multi-phase structure of a Al-Fe based intermetallic compound, even when most of a constituent phase of the Fe-Al based intermetallic compound is FeAl₂, FeAl having a ductility, produced by a reaction with a metal feedstock during thermal spray coating, is present close to FeAl₂, and as a result, a coating film thus produced has a strong toughness as compared with a calorized coating film.

Of the above-formed thermal spray coating film, a Vickers hardness (kg/mm²) and a thermal expansion coefficient (α×10⁻⁶/°C) at a temperature range of from room temperature to 700°C were measured as follows.

The Vickers hardness was determined in such a manner that the thermal spray coating sample prepared was cut and polished, and with respect to the cross section of the polished thermal spray coating film, the hardness was measured on 5 points under a load of 300 g by using a micro Vickers hardness tester, and the average value was taken as the measured value.

The thermal expansion coefficient (α×10⁻⁶/°C) was obtained by increasing the temperature at a rate of 500°C/hr in the air by using a vertical push rod dilatometer, followed by measurement within a range of from room temperature to 700°C.

### (Comp. Ex. 1)

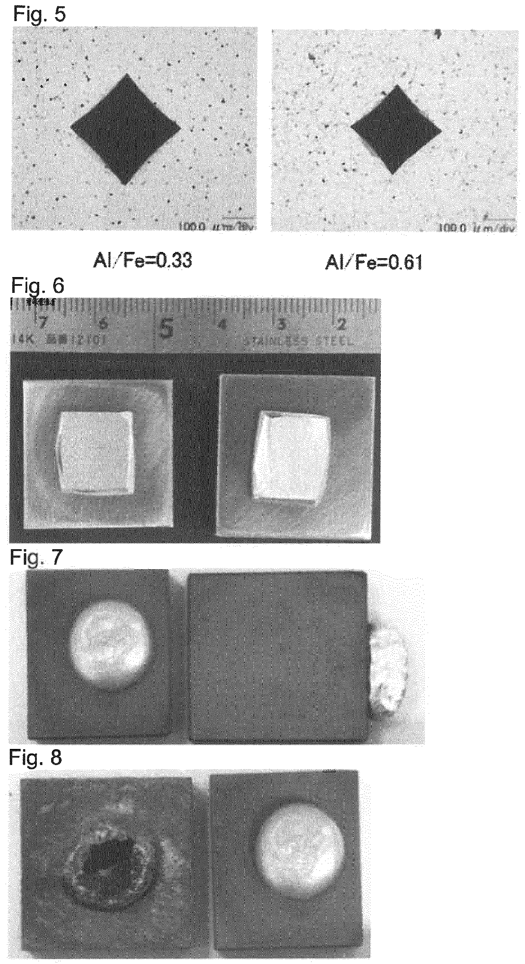

A spherical powder was prepared by atomization method so that a weight ratio (AI/Fe) of Al to Fe in the mixture would be 0.33, and the spherical powder was classified to obtain a powder having a size of from 20 to 75 µm, which was used as a thermal spray feedstock. This feedstock was used to prepare a coating sample in the same manner as in Ex. 1, and the Vickers hardness and the thermal expansion coefficient at a temperature range of from room temperature to 700°C were measured. Most of the constituent phase of the coating film was FeAl, and was identical with a coating film which has been studied heretofore. Fig. 5 is a metallographic microscope image of indentations by a Vickers hardness tester diamond indenter pressed into the cross section of each of the coating film of Ex. 1 and the coating film of Comp. Ex. 1, and shows that the hardness of the conventional coating film is much lower than that of the coating film of the present invention.

### (Comp. Ex. 2)

A bulk material of an Fe-AI intermetallic compound having an Al content of 50 weight% was crushed by a ball mill to obtain an Fe-AI intermetallic compound powder (average particle size: 8 µm). A proportion of the FeAl₂ intermetallic compound in this powder was about 70 weight%.

A powder (average particle size: 5 µm) of a Fe alloy (stainless steel) was prepared by an atomization method, and a proportion of Fe in this powder was 74 weight%.

A thermal spray coating film was formed in the same manner as in Ex. 1 except that the above Fe-AI intermetallic compound powder and the Fe alloy powder were weighed and charged into a rotary ball mill so that the weight ratio (Al/Fe) of Al to Fe in the mixture would be 0.96, followed by mixing and grinding for 48 hours, and the Vickers hardness and the thermal expansion coefficient at a temperature range of from room temperature to 700°C were measured.

The measurement results of the Vickers hardness and the thermal expansion coefficient at a temperature range of from room temperature to 700°C were shown in the following Table.

**[Table 1]**

| | Al/Fe weight ratio in mixture | Vickers hardness kg/mm² | Thermal expansion coefficient ×10⁻⁶ | Main constituent phase |
|---|---|---|---|---|
| Ex. 1 | 0.61 | 450 | 18.5 | FeAl, FeAl₂ |
| Comp. Ex. 1 | 0.33 | 320 | 22 | FeAl |
| Comp. Ex. 2 | 0.96 | 780 | 15 | FeAl₂-Fe₂Al₅ |

The thermal spray coating film in Ex. 1 is a coating film having a multi-phase structure containing FeAl and FeAl₂. In the thermal spray coating film in Ex. 1, the thermal expansion coefficient at a temperature range of from room temperature to 700°C, is substantially the same as the thermal expansion coefficient (a thermal expansion coefficient at from 0 to 649°C is 18.7×10⁻⁶) of stainless steel (SUS)304 widely used as a metal substrate for a glass-conveying roll, and therefore peeling of the coating film when used as a glass-conveying roll is reduced.

Further, the Vickers hardness of soda lime silicate glass, which is about 530 kg/mm² at room temperature, is estimated to be lower than the Vickers hardness of a thermal spray coating film of Ex. 1 at a temperature range of from 400 to 800°C. Therefore, the coating film will not be damaged by e.g. a cullet when used as a glass-conveying roll.

A constituent phase of the thermal spray coating film in Comp. Ex. 1 is FeAl. The thermal spray coating film in Comp. Ex. 1 has a low Vickers hardness, and is significantly different from SUS304 in thermal expansion coefficient at a temperature range of from room temperature to 700°C, and therefore such a coating film may peel when used as a glass-conveying roll.

A constituent phase of the thermal spray coating film in Comp. Ex. 2 is FeAl₂. The thermal spray coating film in Comp. Ex. 2 has a high Vickers hardness but is brittle. Further, the thermal expansion coefficient within a temperature range of from room temperature to 700°C is significantly different from that of SUS304, and therefore such a coating film may peel when used as a glass-conveying roll.

### (Ex. 2, Comp. Ex. 3)

As a metal substrate, a SUS310S plate was used to form a thermal spray coating film in the same manner as in Ex. 1. The thermal spray coating film formed was polished with an abrasive of #2000, and then a small sample of Sn was put on the surface having the thermal spray coating film formed, as shown in Fig. 6 (Ex. 2). A SUS310S plate without thermal spray coating film formed was also polished with an abrasive of #2000, and then a small sample of Sn was put thereon (Comp. Ex. 3). In Fig. 6, the left side shows Comp. Ex. 3, and the right side shows Ex. 2.

These samples were put in a box type electric furnace heated by a MoSi₂ heater, and heated at 1,100°C for one hour in a nitrogen atmosphere.

Fig. 7 shows images after the heating. As shown in Fig. 7, Sn was fixed in Comp. Ex. 3 in which the small sample of Sn was put on the SUS310S plate, but on the other hand, Sn was not fixed in Ex. 2 in which the small sample of Sn was put on the surface having the thermal spray coating film formed, and therefore it was confirmed that the wettability of Sn was low. From this result, it is possible to confirm that metal tin or tin oxide is less likely to be adhered on the surface of a glass-conveying roll.

Further, the sample shown in Fig. 6 was surrounded with a carbon piece in a box type electric furnace heated by a MoSi₂ heater, and in this state, the sample was heated for one hour at 1,100°C in a nitrogen atmosphere. In such a state, an oxygen partial pressure around the sample can be suppressed to be lower, whereby wetting and spreading over of Sn is less likely to be inhibited.

Fig. 8 shows images after the heating. As shown in Fig. 8, Sn became wet to spread over the SUS310S plate in Comp. Ex. 3 in which the small sample of Sn was put on the SUS310S plate, whereby strong bubbling due to reaction of the SUS310S plate with Sn was confirmed. Sn was not fixed in Ex. 2 in which the small sample of Sn was put on the surface having the thermal spray coating film formed, and therefore it was confirmed that the wettability of Sn was low.

### (Ex. 3, Comp. Ex. 4)

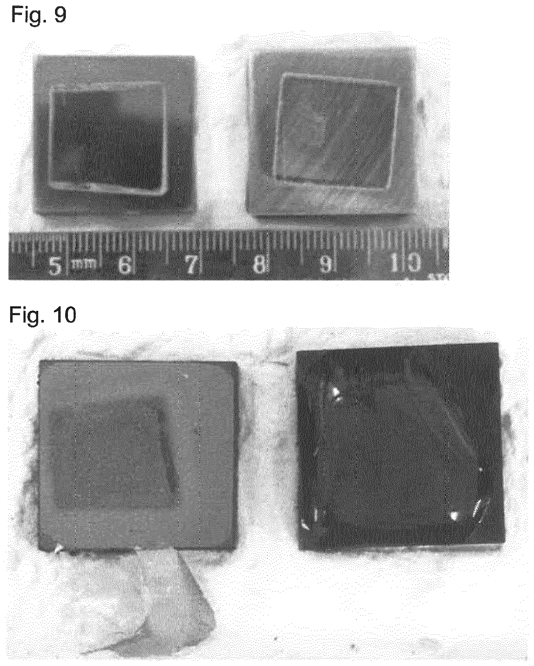

As a metal substrate, a SUS310S plate was used to form a thermal spray coating film in the same manner as in Ex. 1. The thermal spray coating film formed was polished with an abrasive of #2000, and then a small sample of alkali glass (AS manufactured by Asahi Glass Company, Limited) was put on the surface having the thermal spray coating film formed, as shown in Fig. 9 (Ex. 3). A SUS310S plate having no thermal spray coating film formed was also polished with an abrasive of #2000, and then a small sample of alkali glass was put thereon (Comp. Ex. 4). In Fig. 9, the left side shows Ex. 3, and the right side shows Comp. Ex. 4.

These samples were put in a box type electric furnace heated by a MoSi₂ heater, and heated for 0.5 hour at 1,100°C in air.

Fig. 10 shows images after the heating. As shown in Fig. 10, the glass became wet to spread over the SUS310S plate in Comp. Ex. 4 in which the small sample of alkali glass was put on the SUS310S plate, but on the other hand, glass was adhered to only a part of the thermal spray coating film, and the glass was also less spread over, in Ex. 3 in which the small sample of alkali glass was put on the surface having the thermal spray coating film formed. From these results, it was confirmed that the wettability of glass was low. From these results, it is possible to confirm that agglutination of a glass residue to the surface of a conveying roll is less likely to occur when such a thermal spray coating film is used as a glass-conveying roll.

## Claims

1. A method for forming a thermal spray coating film, comprising:
forming a thermal spray coating film of an Al-Fe based intermetallic compound, on the surface of a metal substrate a constituent material of which is iron or an iron-based alloy, from a mixture of an Al-Fe based intermetallic compound powder composed of FeAl₂ in a proportion of at least 75 weight% and a metal powder composed of Fe in a proportion of at least 70 weight%, as feedstock,
wherein a weight ratio Al/Fe of Al to Fe in the mixture is from 0.55 to 0.85, and
wherein a blend ratio of the intermetallic compound powder to the metal powder is from 70/30 to 80/20 by the weight ratio.

2. The method according to Claim 1, wherein a weight ratio Al/Fe of Al to Fe in the intermetallic compound powder is from 0.90 to 1.15.

3. The method according to Claim 1 or 2, wherein the thermal spray coating film has a film-thickness of from 0.05 to 1.5 mm.

4. A thermal spray coating film of an Al-Fe based intermetallic compound, which has a multi-phase structure containing FeAI, FeAl₂ and FeAl-FeAl₂ as a constituent phase in a scanning electron microscopic SEM image showing a cross-section of the thermal spray coating film of an Al-Fe based intermetallic compound, wherein a weight ratio Al/Fe of Al to Fe in the thermal spray coating film is from 0.55 to 0.85,
wherein the thermal spray coating film further contains Al₂O₃ particles having a size of less than 5 µm.

5. The thermal spray coating film according to Claim 4, wherein a distance between Al₂O₃ particles being present within 50 µm from a surface layer of the thermal spray coating film, is at least 5 µm.

6. A glass-conveying roll comprising a metal roll having the thermal spray coating film as defined in Claim 4 or 5 on its surface.

## Patentansprüche

1. Verfahren zum Bilden eines thermischen Spritzbeschichtungsfilms, umfassend:
das Bilden eines thermischen Spritzbeschichtungsfilms einer auf AI-Fe basierenden intermetallischen Verbindung auf der Oberfläche eines Metallsubstrats, dessen konstituierendes Material Eisen oder eine auf Eisen basierende Legierung ist, aus einem Gemisch eines Pulvers einer auf AI-Fe basierenden intermetallischen Verbindung, zusammengesetzt aus FeAl₂ in einem Anteil von mindestens 75 Gewichts-%, und einem Metallpulver, zusammengesetzt aus Fe in einem Anteil von mindestens 70 Gewichts-%, als Ausgangsmaterial,
wobei ein Gewichtsverhältnis Al/Fe von AI zu Fe in dem Gemisch von 0,55 bis 0,85 beträgt und
wobei ein Mischverhältnis des Pulvers der intermetallischen Verbindung zu dem Metallpulver von 70/30 bis 80/20, bezogen auf das Gewichtsverhältnis, beträgt.

2. Verfahren nach Anspruch 1, wobei ein Gewichtsverhältnis Al/Fe von AI zu Fe in dem Pulver der intermetallischen Verbindung von 0,90 bis 1,15 beträgt.

3. Verfahren nach Anspruch 1 oder 2, wobei der thermische Spritzbeschichtungsfilm eine Filmdicke von 0,05 bis 1,5 mm aufweist.

4. Thermischer Spritzbeschichtungsfilm einer auf AI-Fe basierenden intermetallischen Verbindung, welche eine mehrphasige Struktur aufweist, enthaltend FeAl, FeAl₂ und FeAl-FeAl₂ als eine konstituierende Phase in einem rasterelektronenmikroskopischen (SEM) Bild, das einen Querschnitt des thermischen Spritzbeschichtungsfilms aus einer auf AI-Fe basierenden intermetallischen Verbindung zeigt,
wobei ein Gewichtsverhältnis Al/Fe von AI zu Fe in dem thermischen Spritzbeschichtungsfilm von 0,55 bis 0,85 beträgt,
wobei der thermische Spritzbeschichtungsfilm weiter Al₂O₃-Teilchen mit einer Größe von weniger als 5 µm enthält.

5. Thermischer Spritzbeschichtungsfilm nach Anspruch 4, wobei ein Abstand zwischen Al₂O₃-Teilchen, die innerhalb von 50 µm von einer Oberflächenschicht des thermischen Spritzbeschichtungsfilms vorliegen, mindestens 5 µm beträgt.

6. Glasförderrolle, umfassend eine Metallrolle, aufweisend auf ihrer Oberfläche den thermischen Spritzbeschichtungsfilm nach Anspruch 4 oder 5.

## Revendications

1. Procédé de formation d'un film d'enrobage par projection thermique, comprenant :
former un film d'enrobage par projection thermique d'un composé intermétallique à base de Al-Fe, sur la surface d'un substrat métallique dont un matériau constitutif est le fer ou un alliage à base de fer, à partir d'un mélange d'une poudre de composé intermétallique à base de Al-Fe composée de FeAl₂ dans une proportion d'au moins 75 % en poids et d'une poudre métallique composée de Fe dans une proportion d'au moins 70 % en poids, en tant que produit de départ,
dans lequel un rapport pondéral Al/Fe de Al sur Fe dans le mélange va de 0,55 à 0,85, et
dans lequel un rapport de mélange de la poudre de composé intermétallique sur la poudre métallique va de 70/30 à 80/20 en rapport pondéral.

2. Procédé selon la revendication 1, dans lequel un rapport pondéral Al/Fe de Al sur Fe dans la poudre de composé intermétallique va de 0,90 à 1,15.

3. Procédé selon la revendication 1 ou 2, dans lequel le film d'enrobage par projection thermique a une épaisseur de film allant de 0,05 à 1,5 mm.

4. Film d'enrobage par projection thermique d'un composé intermétallique à base de Al-Fe, qui a une structure polyphasique contenant FeAl, FeAl₂ et FeAl-FeAl₂ en tant que phase constitutive dans une image microscopique électronique à balayage MEB illustrant une section transversale du film d'enrobage par projection thermique d'un composé intermétallique à base de Al-Fe, dans lequel un rapport pondéral Al/Fe de Al sur Fe dans le film d'enrobage par projection thermique va de 0,55 à 0,85,
dans lequel le film d'enrobage par projection thermique contient en outre des particules de Al₂O₃ ayant une taille inférieure à 5 µm.

5. Film d'enrobage par projection thermique selon la revendication 4, dans lequel une distance entre des particules de Al₂O₃ qui sont présentes dans les 50 µm d'une couche de surface du film d'enrobage par projection thermique est d'au moins 5 µm.

6. Rouleau de transport de verre comprenant un rouleau métallique ayant le film d'enrobage par projection thermique selon la revendication 4 ou 5 sur sa surface.
